# EUROPEAN PATENT APPLICATION

(11) **EP 2 279 904 A2**
(43) Date of publication of application: **02.02.2011**
(21) Application number: 10380057.9
(22) Date of filing: 20.04.2010
(51) Int. Cl.: B60N 2/42, B60N 2/28

(54) **Device for retensioning the straps used in child seats**

(30) Priority: 31.07.2009 ES 200930338
(71) Applicant: JANE, S.A., 08184 Palau Solita I Plegamans Barcelona (ES)
(72) Inventor: Manuel Jane Santamaria, 08184 Palau Solita I Plegamans (Barcelona) (ES)
(74) Representative: Morgades y Manonelles, Juan Antonio

(57) **Abstract**

The purpose of this invention is a device for retensioning the straps used on the child seats applicable to vehicles, by which, in case of a collision that may cause the movement of the base and the seat coupled to it, manages to retension the straps, securing the child more firmly in the seat by means of the two straps, to achieve the retensioning effect, this device links the straps with the anchoring mechanisms of the children's car seat that are at the base of the seat, more specifically the lower rear ends of the straps are linked to the pneumatic means that activate the anchoring mechanisms, and these ends can be secured to the base of the seat or to the anchoring mechanisms.

## Description

### OBJECT OF THE INVENTION

Device for retensioning the straps used in child seats.

### FIELD OF THE INVENTION

This device can be advantageously applied to child seats used in vehicles.

### BACKGROUND OF THE INVENTION

Several models of this type of child seat are well known, which use straps to secure the child on the seat.

One of these models comprises two adjustable straps linked through a buckle to a crotch strap. These straps are joined together at the rear of the backrest forming a section that goes through a tightening device projecting from the front of the seat.

These child seats fit to cars with a base, using different means to secure the attachment.

Some of these means are composed of mechanical connectors formed by two anchoring elements fitted to the base of the seat and which project from the back, these are destined to fit to a rigid part of the car, one of whose mechanical connectors is the so-called "isofix" mechanism.

Of the systems used for operating the "isofix" anchoring mechanisms, the pneumatic means are well known.

### SUMMARY OF THE INVENTION

The purpose of this invention is a device for retensioning the straps used on the child seats applicable to vehicles, by which, in case of a collision that may cause the movement of the base and the seat coupled to it, manages to retension the straps, securing the child more firmly in the seat by means of the two straps.

To achieve the retensioning effect, this device links the straps with the anchoring mechanisms of the children's car seat that are at the base of the seat.

More specifically the lower rear ends of the straps are linked to the pneumatic means that activate the anchoring mechanisms, and these ends can be secured to the base of the seat or to the anchoring mechanisms.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS:

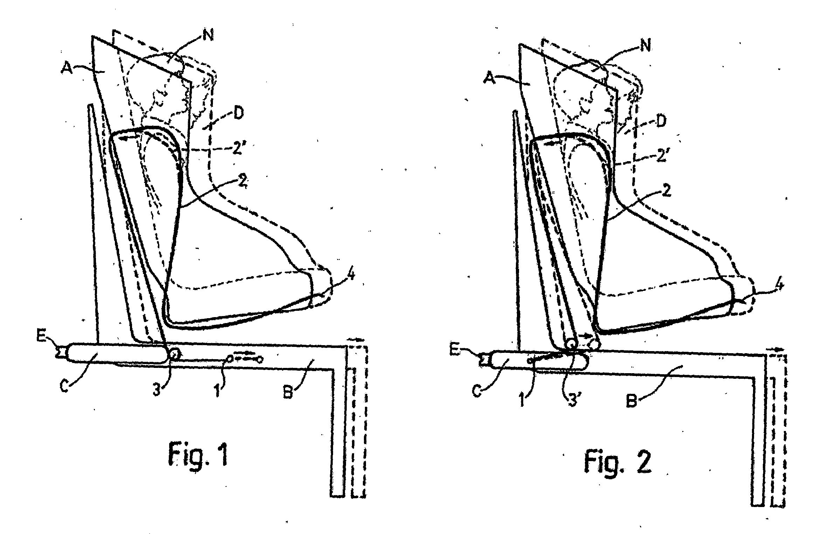

Figures 1 and 2 schematically illustrate the device for retensioning the straps object of the invention, showing how the straps fit in the base of the seat and in the anchoring mechanisms, respectively.

### DETAILED DESCRIPTION

The drawings schematically illustrate the child seat (A) that is fitted to a base (B) from which the "isofix" mechanical connectors project from the rear (C) with pneumatically operated anchoring elements (E).

The device object of this invention is characterised by having the lower rear ends (1) of the straps (2) that secure the child (N) to the seat (A) linked to the "isofix" anchoring mechanisms (C) on the base (B) of the seat.

This linking is pneumatic, activating said anchoring mechanisms, and the lower rear ends (1) of the straps are secured the base (B) of the seat (Fig. 1), or secured to the anchoring mechanisms themselves (C) (Fig 2).

In the anchoring mechanisms (C), this device comprises guide means (3) for the lower rear ends (1) of the straps from their attachment point on the base (B) of the seat (Fig. 1).

And in Fig. 2, the base (B) of the seat that comprises the guide means (3') of the lower rear ends (1) of the straps from their attachment point in the anchoring mechanisms (C).

In both cases, in case of a collision causing a forward movement (D) of the base (B) with the seat (A), as seen in the broken line, the movement of the lower rear part of the straps through the rails (3) or (3') determines the retensioning of the straps (2) according to section (2') illustrated with a broken line, which firmly secures the child (N) to the seat back (A).

Reference (4) indicates the central front end of the strapping, which is adjustable.

The invention can within its essentiality be put into practice in other embodiments differing only in detail from the one having been described above only by way of example, said other embodiments also falling within the scope of the protection being claimed. This device for retensioning the straps used in child seats may thus be manufactured, with the most suitable means and materials and with the most convenient accessories, and the components may be replaced by others that are technically equivalent, as all of this is contained within the spirit of the claims.

## Claims

1. A device for retensioning straps used in child seats, **characterised in that** it links the straps with the anchoring mechanisms of the children's car seat that are at the base of the seat.

2. A device for retensioning straps used in child seats, according to claim 1, **characterised in that** the lower rear ends of the straps are linked pneumatically to the anchoring mechanisms and are secured to the base of the seat.

3. A device for retensioning straps used in child seats, according to claim 1, **characterised in that** the lower rear ends of the straps are linked pneumatically to the anchoring mechanisms and are secured to them.

4. A device for retensioning straps used in child seats, according to claim 2, **characterised in that** the anchoring mechanisms comprise guide means for the lower rear ends of the straps from their attachment point on the base of the seat.

5. device for retensioning straps used in child seats, according to claim 3, **characterised in that** the base of the seat comprises the guide means of the lower rear ends of the straps from their attachment point in the anchoring mechanisms.
